# EUROPEAN PATENT APPLICATION

(11) **EP 2 664 241 A1**
(43) Date of publication of application: **20.11.2013**
(21) Application number: 12003919.3
(22) Date of filing: 18.05.2012
(51) Int. Cl.: A23B 7/024, A23B 7/04, A23L 1/217, A23L 3/36, A23L 3/44

(54) **Dehydrated french fried potato snack products and methods of making the same**

(71) Applicant: Trappmaier, Hermann, 4615 Holzhausen (AT); Voithofer, Paul, 4400 Steyr (AT)
(72) Inventor: Trappmaier, Hermann, 4615 Holzhausen (AT); Voithofer, Paul, 4400 Steyr (AT)
(74) Representative: Hoefer & Partner

(57) **Abstract**

Disclosed are a method for producing a dehydrated French fried potato snack product and a ready-to-eat dehydrated potato snack product.

## Description

### Field of the invention

The present invention concerns a method for producing a dehydrated French fried potato snack product and a ready-to-eat dehydrated potato snack product.

### State of the art

French fried potatoes are one of the most popular side dishes and are often served with fish or meat. Such French fried potatoes are prepared by chopping peeled potatoes into slices and frying them in two stages. The first frying stage is carried out in an oil bath at a temperature of about 100°C to about 140°C for between about 10 to about 20 minutes and has the purpose of gelatinizing the starch to give a certain structure and reducing the moisture content of the sliced potatoes. Usually, after this first frying step, the sliced potatoes are deep-frozen and subsequently packaged in plastic bags which are sold as semi-finished product on the market. To make the sliced potatoes ready-to-eat, it is necessary to perform a second frying step, which is most commonly carried out in an oil bath, but now at higher temperatures of between about 170°C to about 220°C for a shorter period of time, typically between about 2 minutes to about 6 minutes. This second frying step desiccates the surface of the potato slices forming a crispy crust, and changing the color of the potato slices from pale yellow to dark golden yellow. After the second frying step, the French fried potatoes have to be eaten immediately, as the crispy crust and thus the excellent texture and taste, disappear with decreasing temperature. Additionally, French fried potatoes are sold in a deep-frozen, semi-finished form, which is disadvantageous due to high costs for freezing and other logistic aspects. To keep a high quality standard, it is further essential not to interrupt the freezing of the semi-finished potato fries until they are fried for a second time, which is particularly important during transport in warmer weather, particularly in the summer. Such semi-finished French fried potatoes have further disadvantages: the second frying step requires special kitchen equipment and takes a lot of time. Furthermore, the oil content of the French fried potatoes following the second frying step, which is usually carried out in an oil bath, is very high. Although the problem with the oil content may be partially overcome by carrying out the second frying step in a furnace and simply baking the French fried potatoes, this baking process takes even more time, usually between about 12 minutes to about 30 minutes, which is unacceptable nowadays.

Alternatively, potato snack products are available in different shapes and properties, such as thin sliced crispy potato chips. Such potato chips are ready-to-eat, available in different flavors and may be stored at room temperature for a longer period of time. However, to obtain such high storage life the potato chips have an extremely low moisture content of about 3% or less, which is obtained by frying the sliced potatoes in oil. Such excessive frying again increases the oil content of the potato chips, which is unhealthy. Furthermore, for a crispy delicious taste and desirable texture, the slices of the potato chips need to be very thin, and therefore, have a thickness of about 1 mm or less, for example. This thickness, however, increases the risk of breakage during manufacturing, packaging and transport of the potato chips and leads to reduced acceptance by the consumer. However, due to the specific manufacturing process of the potato chips, it is impossible to decrease the risk of breakage by increasing the thickness of the potato slices. Slices of more than about 2mm in thickness are hard and inedible.

Each of the foregoing disadvantages are overcome by the product and method of this invention. Additionally, other advantages are discussed in more detail.

### Disclosure of the invention

The present invention is directed to a dehydrated French fried potato snack product and a method of making the same.

The present invention is related to a method for producing a dehydrated French fried potato snack product, comprising the steps of preparing potato pieces, frying the potato pieces, freezing the fried potato pieces at a temperature ranging between about -60°C to about -150°C, and freeze-drying the frozen potato pieces to reduce the residual water content.

Products made with this method obtain a delicious and crispy potato snack product which is ready-to-eat, i.e. does not require any processing steps prior to consumption or any specific kitchen equipment for preparation by the consumer, saving time and money. By freeze-drying the frozen potato pieces, the water content of the snack pieces is reduced, which is conventionally achieved by frying the snack pieces in an oil bath. Furthermore, by using the freeze-drying method to reduce the residual water content in the final product, the second frying step of the present invention may be carried out for a shorter period of time, which keeps the oil content of the potato snack product low.

The freeze-drying also has other advantages including that the shape, and in particular the thickness, of the French fried potato snack product may be arbitrary. Even if the thickness of the potato snack product is several centimeters, the potato snack product is crispy, but not at all hard. Furthermore, due to the reduced water content, the potato snack product may be stored for at least about 6 months at room temperature and does not require the use of preservatives. Because of these benefits, the inventive product has a high market acceptance. Furthermore, the manufacturing of the dehydrated French fried potato snack product according to the present invention may be easily performed and does not require cost intensive equipment or high-technology production machinery. Moreover, where the logistical requirements for packaging, storing and transporting of the snack product are extremely low since it is not necessary to keep the final product cooled.

The preparation of the potato pieces may be carried out in a conventional manner. Usually, the potatoes are washed, dried, peeled and then cut into desired shapes. Non-limiting examples of desired shapes may include slices, splits, rings, cubes or the like, or combinations thereof. Further processing steps may be subsequently carried out, including but not limited to, seasoning, salting, blanching, stewing, cooking, or combinations thereof if desired.

Subsequently, a first frying step is carried out in a heated oil bath. The first frying step may be performed at any suitable temperature, e.g. in a temperature range from about 120°C to about 180°C for a predetermined period of time depending on the sort of potato used, the shape of the final product and, in particular, the thickness of the potato pieces. The time and temperature of the first frying step are chosen such that the potato pieces are at least partially cooked following the first frying step. It is essential that the potato pieces are at least partially cooked in the first frying step in order to gelatinize the starch contained in the potato pieces, which provides an edible potato snack product.

Once the potato pieces are cooked sufficiently, the fried potato pieces are cooled to a temperature of less than about 100°C, preferably to about room temperature and even more preferably to at least about -10°C. It is important to accomplish cooling between the first and the second frying step to obtain homogeneously cooked potato pieces. When the first and second frying steps are not separate, i.e. the frying would be carried out in only one step, a thick dark brown and hard crust forms at the surface of the potato pieces, which isolates the inner most parts of the potato pieces. In this situation, the inner most parts of the potato pieces are not sufficiently cooked, and the starch contained in the potato pieces remains un-gelatinized. As a consequence, the potato snack product is inedible.

A cooling down to a temperature of less than about 100°C, is sufficient to cool at least the outer parts of the potato pieces that preferably tend to form a brownish burned hard crust, to a temperature where the browning reaction is stopped. In this situation, the inner most parts of the potato pieces may still be hot or at least warm indicating that the inner parts of the potato pieces are still cooking and tend to become too soft if not interrupted. Therefore, it is preferable that the potato pieces are cooled to room temperature, which is about 25°C. This effectively prevents the potato pieces from the formation of a dark brown cover. Furthermore, cooling the potato pieces down to a temperature of at least about -10°C is further advantageous in a batch-to-batch process, i.e. when a large amount of potato pieces are fried for the first time, which is then stored until the manufacturing process of the present invention potato snack product is completed.

The cooling step may be carried out in any suitable manner. A non-limiting example includes storing the fried potato pieces in a cooling chamber. In this context it is outlined that some of the process steps are similar to those steps carried out when preparing semi-finished French fried potatoes according to the prior art. Such conventional semi-finished French fries are usually stored at a temperature of at least about -10°C.

The present method produces a dehydrated French fried potato snack product. Therefore, such deep-frozen semi-finished French fried potatoes available on the market may be subjected to the further essential process steps to complete the manufacture of the inventive dehydrated French fried potato snack product.

A second frying step may be performed on the cooled potato pieces, which have previously undergone a first frying treatment. The second frying may be carried out in a heated oil bath at any suitable temperature, which may be between about 120°C and about 200°C, preferably between about 150°C and about 180°C, and more preferably at about 175°C. The second frying step may be performed for only a few minutes, i.e. until a golden yellow crispy crust is formed at the surface portion of the potato pieces and the inner most part of the potato pieces is cooked sufficiently. The formation of a respective crispy crust typically occurs at a temperature of at least about 120°C. However, at temperatures of at least about 150°C and preferably at about 175°C, a homogenous crust forms covering the whole surface portion of the potato pieces. The higher the temperature of the second frying step, the faster and more intense the crispy crust forms. If the temperature exceeds about 180°C and in particular at about 200°C, the surface portion of the potato pieces tends to burn, which leads to a bitter taste of the potato snack product and further changing its color from golden yellow to dark brown rendering the potato snack product brittle and inedible. Since the second frying step is also for completing the cooking of the potato pieces, it is essential to adapt the temperature of the second frying step in order to sufficiently cook the potato pieces and to form a desired crispy crust on the surface portions of the potato pieces. Thus, the thinner the potato pieces are, the higher the temperature of the second frying step may be chosen as thin potato pieces get cooked faster. In doing so, the potato pieces are homogeneously cooked, and whereby the starch contained in the potato pieces gelatinize completely and the color of the potato pieces turns from pale yellow to golden yellow.

Additionally, in the second frying step, the water content remaining in the potato pieces is reduced. However, since the reduction of the water content to a predetermined sufficiently low level is completed by the freeze-drying step, the duration of the second frying step may be shortened. This reduced duration has the advantage that the potato pieces do not absorb as much oil from the second frying step. Consequently, the inventive potato snack product has a reduction in the final oil content. The first and second frying temperatures as well as the first and second frying times may be easily determined by a skilled person via comparison experiments.

Following the frying steps, the fried potato pieces are subjected to freezing treatment at a temperature ranging from about -60°C to about -150°C and preferably from about -90°C to about -120°C. The freezing treatment should be carried out as fast as possible. The freezing treatment at very low temperatures is essential to product a homogeneous taste in the potato snack product of the present invention and to a homogeneous stable and crispy structure therein. Further, by immediately starting the freezing process immediately after the frying step, deformation or breakage of the fried potato pieces may be prevented since the strength of the crispy crust at the surface portion of the potato pieces is greatest at that point.

It is essential that the freezing step is carried out at a temperature between about - 60°C to about -150°C and preferably between about -90°C to about -120°C to improve the homogeneous crispy taste of the inventive potato snack product. The freezing step occurs until also the temperature of each of the potato pieces, measured at the inner most portion of the potato pieces, is within the same range. Accordingly, the freezing step is usually carried out for between about 10 seconds to about 20 seconds depending on the size, shape and thickness of the potato pieces. In general, after subjecting the fried potato pieces to the freezing step at a temperature ranging from about -60°C to about -150°C for about 20 seconds, the innermost portion of such potato piece has a temperature of at least about -60°C and no less than about -150°C. By freezing at temperatures of greater than about -60°C the time for freezing increases, the crispiness of the formed crust is reduced, which decreases the desirable texture of the final potato snack product even after subsequent freeze-drying of the potato pieces. In such case, the surface of the potato snack product is both elastic and tough and is therefore inedible.

In the situation where the temperature during the freezing step exceeds -150°C i.e. is below -150°C, freezer burn tends to occur on the surface of the potato pieces and is visible with the naked eye. Typically, white dots appear at the surface portion of freezer burned potato pieces, which is caused by the starch in the potato. These frozen potato pieces tend to form cracks or simply crack during the subsequent process steps. When the temperature during freezing is within the specified range, the potato pieces are uniformly frozen, remain as a homogeneous structure and an excellent crispy crust is present at the surface portion of the potato pieces. For exceptional shapes of the potato pieces and for some specific sorts of potatoes, a freezing temperature lower than about -120°C to about -150°C or higher than about -90°C to about -60°C may be more preferable. The suitable freezing temperature may be easily determined by a skilled person via comparison experiments. The freezing of the potato pieces may be performed in any common manner using any suitable equipment.

In a subsequent step of the inventive method, a freeze-drying step of the frozen potato pieces may be carried out to reduce the residual water content. The freeze-drying step may be carried out in a conventional manner. A non-limiting example includes freeze-drying in a freeze-drying unit, freeze-drying plant or combinations thereof.

In conventional manufacturing methods of producing French fried potatoes, it is necessary to fry the sliced potatoes for a longer time to produce a ready-to-eat product which has reduced water content, giving the French fries their characteristic taste. Freeze-drying advantageously reduces the oil content of the dehydrated French fried potato snack product, while retaining the unique crispy taste. Freeze-drying also increases the storage stability, crispiness and flavor stability of the final potato snack product. The duration of the freeze-drying treatment depends on the sort of potato used, its size, shape and thickness. Moreover, the freeze-drying may be carried out until the residual water content has reached a predetermined value. Suitable parameters of the freeze-drying are a temperature between about -25°C to about 80 °C, preferably maximum of about 40°C; a pressure of about 10⁻² hPa (mbar) and a time of between about 480 min to about 1080 min, preferably about 700 min to 800 min. Such parameters are suitable to reduce the residual water content of the freeze dried potato product to a predetermined value.

The sub-claims concern advantageous embodiments of the present invention.

According to an embodiment of the present invention, the freezing of the fried potato pieces is performed at a temperature ranging from between about -90°C to about -120°C. A temperature range of between about -90°C to about -120°C further facilitates the manufacturing of the present invention of a dehydrated French fried potato snack product as in this narrow temperature range, the respective potato pieces are sufficiently frozen such that the homogeneous structure and highly crispy crust may be maintained regardless of the sort of potato, i.e. for each potato variety, for most commonly used shapes and sizes.

According to a preferred embodiment, the second frying of the potato pieces is performed at a temperature between about 120°C and about 200°C, preferably between about 150°C and about 180°C, and even more preferably at about 175°C. At a temperature of at least about 120°C and preferably at least about 150°C and even more preferably at about 175°C, the cooking or boiling of the potato pieces can be easily carried out, even if the potato pieces have different sizes or shapes. This contributes to the formation of a homogeneous inner structure of the potato pieces and amplifies the homogeneous strength and taste of the final potato snack product. In particular, at a temperature of at least about 150°C and even more at about 175°C the formation of a golden yellow crispy crust at the surface portion can be forced which intensifies additionally the taste and the texture of the inventive potato snack product. However, if the temperature exceeds 180°C and in particular 200°C, the surface portion of the potato pieces tends to burn which leads to a bitter taste of the potato snack product further changing its colour from golden yellow to dark brown. The potato snack product is brittle and inedible.

According to a further preferred embodiment of the invention, sunflower oil is used to fry the potato pieces. Sunflower oil is relatively cheap and highly available on the market. It was further found the potato pieces are more likely to fry homogenously due to characteristics of the oil, including good temperature stability and viscosity. Furthermore, sunflower oil is regarded as very healthy and does not contain trans fatty acids, which may lead to a higher acceptance of the present invention by the consumer.

It is further advantageous to perform the second frying for between about 1.5 minutes to about 5 minutes, and preferably between about 2 minutes to about 4 minutes. The frying time of the second frying step is essential to completely cook the potato pieces and form a crispy crust at the surface of the potato pieces. The second frying may be carried out for between about 1.5 minutes to about 5 minutes and preferably between about 2 minutes to about 4 minutes in order to balance the sufficiency of cooking or boiling of the potato pieces and the pleasant yellow golden crispy crust formed at the surface of the potato pieces. The preferable frying time may be easily determined by a person skilled in the art.

According to a further preferred embodiment, liquid nitrogen may be used for the freezing of the fried potato pieces. Surprisingly, it was found that homogeneously freezing of the fried potato pieces may be easily accomplished, and promptly with liquid nitrogen. It is essential that the freezing step is carried out immediately after the second frying step in order to maintain the crispiness of the crust previously formed. Liquid nitrogen has a very low boiling point and rapidly reduces the temperature of the fried potato pieces. Additionally, due to the high volatility of the liquid nitrogen and its high evaporation rate, the liquid nitrogen does not stick to the surface of the potato pieces and freezer burn may be prevented. The required temperature may be achieved by either mixing liquid nitrogen with respective amounts of air and/or by controlling the nitrogen flow such that the mixed temperature of the still hot fried potato pieces and the liquid nitrogen, resulting in a temperature of between about -60°C to about -150°C at the surface of the fried potato pieces. After an appropriate time in the nitrogen flow, the final temperature of the potato pieces drops to between about -60°C to about -150°C. The time required to completely freeze the fried potato pieces to a temperature of about -60°C to about -150°C may be determined easily by a skilled person via comparison tests.

According to a further preferred embodiment, freeze-drying of the frozen potato pieces is performed until the residual water content of the potato pieces is below about 8% and preferably between about 2% to about 5%. If the residual water content is below about 8% and preferably between about 2% and about 5%, the amount of "active water," which is essential for bacterial growth, may be sufficiently low so that the addition of preservatives may be avoided. Furthermore, if the residual water content is within the claimed range and preferably between about 2% and about 5%, the final potato snack product has a homogeneous crispy structure, excellent storage stability and flavor stability. The texture is excellent since the potato snack product is neither too brittle nor too hard. The residual water content may be easily determined via Karl-Fischer titration.

According to the above captioned method a high quality potato snack product may be easily produced. The potato snack product combines the crunchiness and crispy taste of conventional potato chips with a healthy, tasteful, desirable shape and size of a conventional French fried potato and minimizes the oil content in the final potato snack product.

The invention further concerns a ready-to-eat dehydrated potato snack product having an elongation at break of at least about 0.8mm. The maximum power loss of the ready-to-eat dehydrated potato snack product may be less than about 60%, and preferably less than about 55%. For the sake of completeness it is outlined that by adopting the above captioned method, a ready-to-eat dehydrated potato snack product having an elongation at break of at least about 0.8mm can be obtained, wherein the maximum power loss is less than about 60%, and preferably less than about 55%. The term "ready-to-eat" means that no processing steps need to be carried out by the consumer prior to consumption. The inventive ready-to-eat dehydrated potato snack product may be eaten at room temperature.

It is essential that the elongation at break is at least about 0.8mm. The term "elongation at break" corresponds to the maximum peak shown in a diagram, wherein the power (in Newtons [N], for example) that is applied to a surface of a test specimen of a French fried potato snack product via a dropping prop is plotted versus the elongation length at break (in millimeters [mm], for example). The dropping prop first deforms the crispy outer surface of the potato snack product and at the inner structure of the snack product irreversibly. The maximum peak upon which the elongation at break is determined according to the present invention relates to the point of breaking of the crispy outer surface of the test specimen. If the maximum power loss after traversing the maximum peak is less than about 60% and preferably less than about 55%, the inner structure of the potato snack product is homogeneous. In other words, the difference in crispiness of the outer surface crust and the inner structure is low. If the maximum power loss exceeds about 55% and even more about 60%, then the test specimen does not have a respective inner structure since the dropping prop falls relatively unhindered through the test specimen after having destroyed the outer crispy crust. If the elongation at break is less than about 0.8mm, the potato snack product is too brittle and forms cracks easily or breaks during the manufacture, packaging or transport thereof. If the elongation at break is too high, e.g. about 4mm, the potato snack product is too elastic and no crispiness or crispy crust is formed at least at a surface portion of the potato snack product rendering the texture and taste undesirable.

Advantages, effects and embodiments described above in view of the inventive method for producing a dehydrated French fried potato snack product are also applicable for the inventive ready-to-eat dehydrated potato snack product.

Furthermore, according to a further preferred embodiment, the residual water content of the inventive ready-to-eat dehydrated potato snack product is below about 8%, and preferably between about 2% and about 5%. Accordingly, the addition of any preservative may be omitted, increasing the acceptance of the inventive product by the consumer.

### Drawings

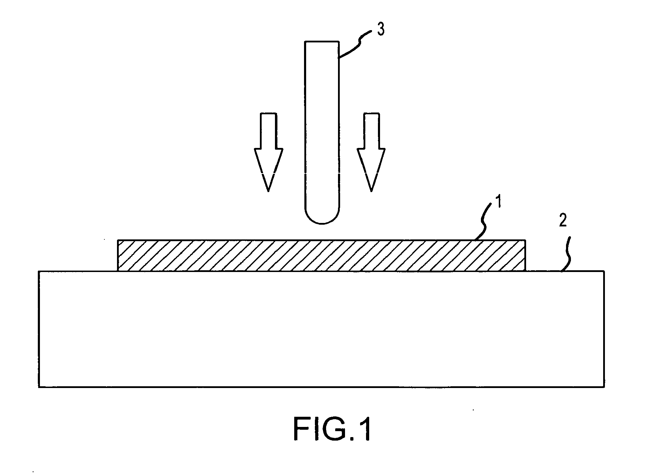

The invention will be described in additional detail with reference to the Figures. FIG. 1 illustrates an experimental test assembly for determining the elongation at break of a test specimen 1, i.e. a potato snack product. The elongation at break is determined on the test specimen 1 at room temperature, i.e. at about 25 °C. The test specimen 1 is provided on a steel plate 2. A test body 3 is a hemispherical hydraulic prop having a diameter of about 5 mm, which is lowered to a center portion of the test specimen 1 at a rate of about 2mm/min. The maximum penetration depth of the prop 3 is reached when the maximum power loss is about 60% or higher. In other words, the prop 3 is dropped until it reaches the surface portion of the test specimen 1. When the prop 3 reaches the surface of the test specimen 1, the crispy crust of the test specimen 1 is resistant due to the inner structure of the test specimen 1 until the power applied to the surface of the test specimen 1 by the still dropping prop 3 is too high and meets the inner structure of the test specimen 1. When an even higher power is applied to the surface of the test specimen 1, the surface portion and inner structure of the test specimen 1 are destroyed and the potato snack product 1 finally breaks such that the prop 3 falls more unhindered and the power promptly decreases. It is essential that the maximum power loss after traversing the maximum peak corresponding to the point of breaking of the outer crispy crust of the dehydrated potato snack product is less than about 60% and preferably less than about 55% as in this case, the crispiness throughout the whole dehydrated potato snack product is excellent and the inner structure of the dehydrated potato snack product 1 is sufficiently homogeneous giving a high stability of the product providing excellent crunchiness so that the product is highly edible which contributes to an extraordinary texture. If the maximum power loss exceeds about 60% the outer surface portion of the test specimen 1 only has a hard crispy crust, but a too soft and non-stable inner core which leads to reduced edibility. After cracking the crispy crust of such a test specimen 1, the dropping prop 3 falls unhindered due to absence of a respective inner structure, and the maximum power loss exceeds about 60%.

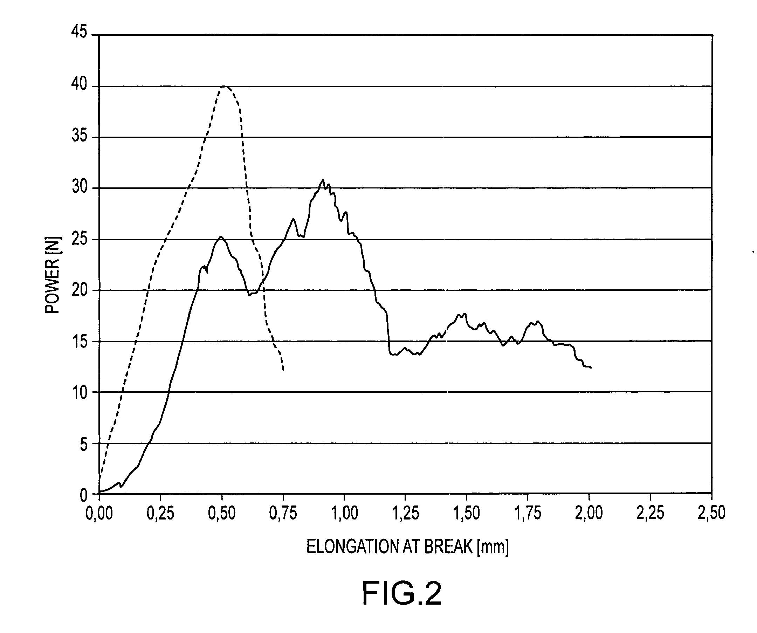

FIG. 2 illustrates a diagram obtained by measuring the elongation at break for two different test specimens. The solid line shows the test results of a dehydrated potato snack product prepared according to the method of the present invention, wherein the dotted line show the test results of a conventional French fried potato. The dehydrated potato snack product and the conventional French fried potato have the same size.

The two test specimens are prepared as follows:
a) The dehydrated potato snack product (solid line):
   A "Bellarosa" potato, having a starch content of about 15.5% was washed, peeled, dried and cut into squares having a length of about 6cm, a width of about 1.5cm and a thickness of about 1.5cm. The potato squares were initially fried in sunflower oil at about 175°C for about 11 minutes, then cooled to about -12°C in a freezer. The potato squares were fried for a second time in sunflower oil at about 175°C for about 2.5 minutes. Thereafter, the potato pieces obtained had a light golden yellow crispy crust on the outer surface side and were completely cooked at the inside. The fried potato pieces were then frozen in a gas mixture of liquid nitrogen and air at a temperature of about -90°C for 15 seconds, which dropped the temperature of the potato pieces to about -90°C. The deep-frozen potato pieces were then transferred into a freeze-drying unit and subjected to freeze-drying at a temperature of about -25°C to about 80°C at a pressure of about 10⁻² hPa (mbar) for about 740 minutes. After the freeze-drying, the potato pieces were stored at room temperature (approximately 25°C) until the elongation at break was determined. The potato pieces had a water content of about 4.5% measured via Karl-Fisher titration.
b) test specimen prepared according to a conventional method (dotted line):
   A "Bellarosa" potato, having a starch content of about 15.5% was washed, peeled, dried and cut into squares having a length of about 6cm, a width of about 1.5cm and a thickness of about 1.5 cm. The potato squares were initially fried in sunflower oil at about 175°C for about 11 minutes, then cooled to about -12°C in a freezer. The potato pieces were fried for a second time in sunflower oil at about 175°C for about 5.5 minutes. The potato pieces had a dark golden yellow crispy crust on the outer surface side and were completely cooked at the inside. The potato pieces had a water content of about 4.5% measured via Karl-Fisher titration. The French fried potato pieces were cooled to room temperature (approximately 25°C), and then, the elongation at break was determined.

The samples were tested for their elongation at break and the results are illustrated in Figure 2. The dehydrated potato snack product prepared according to method of the present invention (solid line) shows a maximum peak at about 0.9mm, and thus, has an elongation at break of at least about 0.8mm. Several smaller peaks are present which symbolize a relatively homogeneously structured body. Furthermore, the maximum power loss was below about 50% which is less than the about 60% maximum, i.e. the percent difference between top point of the maximum peak, which was about 30N, and the minimum of the line, which was about 14-15N. Thus, the inventive dehydrated potato snack product is characterized by a crispy, but sufficiently elastic crust, which is essential for the texture and homogeneous inner structure, which was neither brittle nor hard but cross, easily and enjoyably edible. The French fried potato pieces prepared according to the conventional method (b) shows only one single peak at about 0.5mm, i.e. an elongation at break of less than 0.8mm. After application of about 40N, the dropping prop suddenly fell through the whole test specimen. The maximum power loss was about 70%, which exceeded about 60%, i.e. the percent difference between top point of the maximum peak, which was about 40N and the minimum of the line, which was about 12-13N. Thus, the test specimen had a crispy crust but no inner structure so that the prop fell completely unhindered through the test specimen and destroyed its complete structure in a moment rendering the conventional potato product inedible.

## Claims

1. A method for producing a dehydrated French fried potato snack product comprising the steps of
- preparing potato pieces
- frying said potato pieces in a first frying step
- cooling the fried potato pieces to a temperature of less than about 100°C
- frying said cooled potato pieces in a second frying step
- freezing the fried potato pieces at a temperature ranging from between about
- 60°C to about -150°C, and
- freeze-drying the frozen potato pieces to reduce the residual water content.

2. The method according to claim 1, wherein the freezing of the fried potato pieces is carried out at a temperature ranging from between about -90°C to about -120°C.

3. The method according to claim 1 or 2, wherein the second frying step of the potato pieces is performed at a temperature between about 120°C to about 200°C, preferably between about 150°C to about 180°C, and even more preferably at about 175°C.

4. The method according to any of claims 1 to 3, wherein the first and second frying step of the potato pieces is performed in sunflower oil.

5. The method according to any of the preceding claims, wherein the second frying step is performed for between about 1.5 to about 5 minutes, preferably for between about 2 to about 4 minutes.

6. The method according to any of the preceding claims, wherein for the freezing liquid nitrogen is used.

7. The method according to any of the preceding claims, wherein the freeze-drying of the frozen potato pieces is performed until the residual water content of said potato pieces is below about 8%, and preferably between about 2% and about 5%.

8. Potato snack product produced according to any of the preceding claims.

9. Ready-to-eat dehydrated potato snack product having an elongation at break of at least about 0.8mm and wherein the maximum power loss is less than about 60%, preferably less than about 55%.

10. Ready-to-eat dehydrated potato snack product according to claim 9, wherein the residual water content of said potato snack product is below about 8%, and preferably between about 2% and about 5%.
